(19) Europäisches Patentamt / European Patent Office / Office européen des brevets

(11) **EP 4 621 627 A1**

(12) **EUROPEAN PATENT APPLICATION**

(43) Date of publication:
24.09.2025 Bulletin 2025/39

(51) International Patent Classification (IPC):
**G06F 21/64** (2013.01)  **H04L 9/32** (2006.01)

(21) Application number: 24164747.8

(52) Cooperative Patent Classification (CPC):
**H04L 9/3236; G06F 21/64**

(22) Date of filing: **20.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beckman Coulter, Inc.**
**Brea, CA 92821 (US)**

(72) Inventor: **THOMPSON, Ben**
**Brea, 92821 (US)**

(74) Representative: **2SPL Patentanwälte PartG mbB**
**Landaubogen 3**
**81373 München (DE)**

(54) **A METHOD FOR OBTAINING VERIFICATION DATA, A METHOD FOR PROVIDING VERIFICATION DATA, A METHOD FOR VERIFYING DATA, A SYSTEM AND A COMPUTER PROGRAM**

(57) A method for obtaining verification data, the method comprises receiving generated data from a data source; calculating a hash value for the generated data; transmitting the hash value to a verification service provider; receiving verification data from the verification service provider; and storing the generated data and the verification data.

Fig. 1

## Description

### Technical field

Examples relate to the verification of data to prove the authenticity.

### Background

There is a desire to prove that the output of an instrument has not been doctored or modified in any way. An example of this is an image from a microscope device. Given the ease with which images (or other data) can be modified, there is a need to prove the data submitted, whether to a journal or regulatory body, has come directly from the measurement device and has not been modified.

### Summary

Hence, there is a need for an improved concept for the verification of data.

This desire is addressed by the subject-matter of the independent claims.

Some examples relate to a method for obtaining verification data. The method comprises receiving generated data from a data source and calculating a hash value for the generated data. Further, the method comprises transmitting the hash value to a verification service provider and receiving verification data from the verification service provider. Additionally, the method comprises storing the generated data and the verification data.

By calculating and transmitting a hash value, the generated data can be kept private. Additionally, the amount of data to be transmitted can be kept low. Further, the received verification data can be stored together with the generated data for later verification.

Some examples relate to a method for providing verification data. The method comprises receiving a hash value of generated data from a data generation device and calculating verification data based on the hash value and a secret key. Further, the method comprises transmitting the verification data to the data generation device.

By receiving a hash value instead of the generated data, the generated data can be kept private. By using a secret key for generating the verification data, the verification data may represent a secure information for later verification of the generated data. The required memory may be kept low as it may be sufficient to store the secret key, but not the hash value or the generated data.

Some examples relate to a method for verifying data. The method comprises receiving stored data and verification data of the stored data and calculating a hash value for the stored data. Further, the method comprises transmitting the hash value and the verification data of the stored data to a verification service provider and receiving verification information from the verification service provider. The verification information indicates whether the stored data has been altered.

By calculating and transmitting a hash value, the data to be verified can be kept private. Further, the amount of data to be transmitted can be kept low. A secure verification of the data may be enabled.

Some examples relate to a method for verifying data. The method comprises receiving a hash value calculated for stored data and receiving verification data generated for the stored data and calculating reference verification data based on the hash value and a secret key. Further, the method comprises transmitting verification information indicating whether the stored data was altered based on a comparison of the reference verification data and the received verification data.

By receiving a hash value and verification data instead of the stored data, the stored data can be kept private. By using a secret key for generating the reference verification data, the reference verification data cannot be generated by unauthorized entities. The required memory may be kept low as it may be sufficient to store the secret key, but not the hash value, the verification data, the reference verification data or the stored data.

### Short description of the Figures

Some examples of apparatuses and/or methods will be described in the following by way of example only, and with reference to the accompanying figures, in which

Fig. 1    shows a flowchart of a method for obtaining verification data;

Fig. 2    shows a flowchart of a method for providing verification data;

Fig. 3    shows a flowchart of a method for generating verification data;

Fig. 4    shows a flowchart of a method for verifying data;

Fig. 5    shows a flowchart of a method for verifying data;

Fig. 6    shows a flowchart of a method for verifying data;

Fig. 7    shows a system comprising one or more processors and one or more storage devices; and

Fig. 8    shows a system comprising a microscope and a computer system.

## Detailed Description

Various examples will now be described more fully with reference to the accompanying drawings in which some examples are illustrated. In the figures, the thicknesses of lines, layers and/or regions may be exaggerated for clarity.

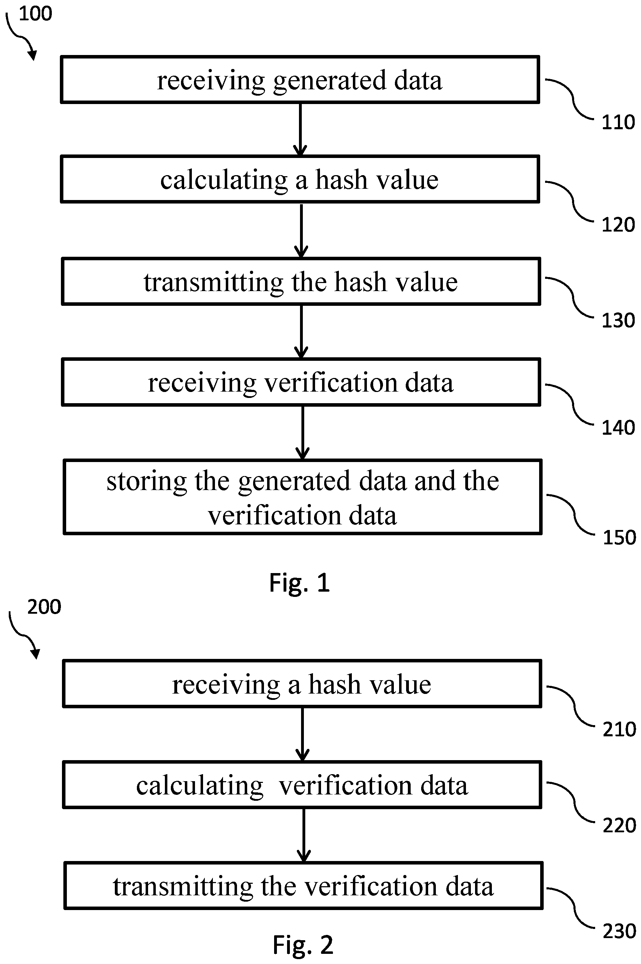

Fig. 1 shows a flowchart of a method 100 for obtaining verification data. The method 100 comprises receiving 110 generated data from a data source and calculating 120 a hash value for the generated data. Further, the method 100 comprises transmitting 130 the hash value to a verification service provider and receiving 140 verification data from the verification service provider. Additionally, the method 100 comprises storing 150 the generated data and the verification data.

The generated data may be data generated by any data source (e.g. a sensor or a camera). The data source may be any source, which generates data. The data source may be a sensor (e.g. temperature sensor, magnetic field sensor or acceleration sensor) or an image sensor or camera (e.g. of a microscope or a vehicle). For example, the data source is not just a memory for storing data generated by other devices.

The generated data may be sensor data or image data. The generated data may be received 110 from the data source through a wired or wireless connection. The data source and processor calculating the hash value may be part of the same device (e.g. a microscope, a camera or a vehicle) or may be located at different locations (e.g. connected through the internet). For example, the hash value may be calculated at the data source. For example, the hash value may be calculated by a software (e.g. microscope control software or control software or operating system of a vehicle) used also to control the data source to generate the generated data.

The hash value may be calculated 120 based on any hash algorithm satisfying the desired security level. For example, the hash value may be calculated based on an SHA-2 or SHA-3 algorithm. The hash value may be a bit sequence. The hash value may have at least 128 bits (or at least 256 bits).

The hash value may be transmitted 130 to a verification service provider through a wired and/or wireless connection (e.g. using the internet). For example, the hash value may be sent 130 to the verification service provider together with a request for the generation of verification data. The hash value may be encrypted before the transmission to the verification service provider to enable a secure data communication to the verification service provider.

The verification service provider may provide a platform (e.g. internet platform) for receiving verification requests. The verification service provider may be the manufacturer of the data source (e.g. image sensor) or the manufacturer of a device including the data source (e.g. microscope comprising an image sensor as data source).

For example, the generated data is not transmitted to the verification service provider. The generated data can be kept private as the hash value may be sufficient to obtain verification data (e.g. described in connection with Fig. 2).

The verification data may be received 140 from the verification service provider through a wired and/or wireless connection (e.g. using the internet). The received verification data may be encrypted verification data and may be decrypted before storing. The verification data may also be called verification code or verification value.

The verification data may be a bit sequence of at least 128 bits (or at least 256 bits). The verification data may have the same length as the hash value of the generated data. The verification data may be a hash value itself.

The generated data and the verification data (e.g. the verification data or the decrypted verification data) may be stored 150 in a linked manner. For example, the generated data and the verification data may be stored in a predefined data format. If the generated data is image data, an image file may be generated comprising the image data and the verification data and the image file may be stored. The verification data may be stored as meta data of the image file.

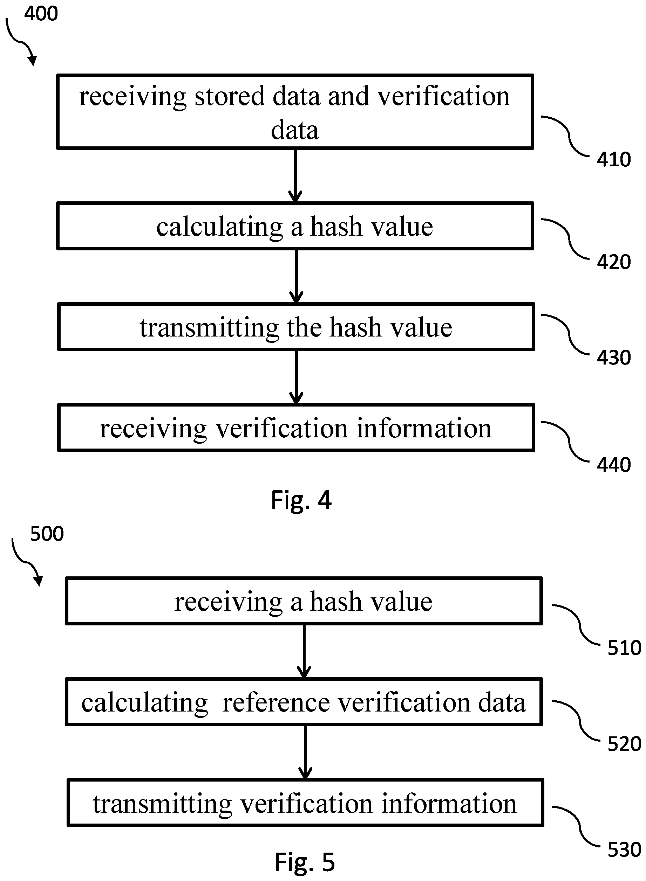

The generated data and the verification data may be stored by any memory for later use. The authenticity may be verifiable any time according to the concept described below (e.g. Fig. 4 and 5).

The hash value might not be stored together with the generated data and the verification data. The hash value may be recalculated anytime from the generated data. For example, the hash value can be erased after transmission to the verification service provider. The amount of required storage space can be kept low.

More details and aspects are mentioned in connection with the embodiments described above or below. The example shown in Fig. 1 may comprise one or more optional additional features corresponding to one or more aspects mentioned in connection with the proposed concept or one or more examples described above or below (e.g. Fig. 2-8).

Some examples relate to a system comprising one or more processors and one or more storage devices. The one or more processors are configured to receive generated data from a data source and calculate a hash value for the generated data. Further, the system is configured to trigger a transmission of the hash value to a verification service provider. Further, the system is configured to receive verification data from the verification service provider and the one or more storage devices are configured to store the generated data and the verification data. More details and aspects are mentioned in connection with the embodiments described above or below.

Fig. 2 shows a flowchart of a method 200 for providing verification data. The method 200 comprises receiving 210 a hash value of generated data from a data generation device and calculating 220 verification data based on the hash value and a secret key. Further, the method 200 comprises transmitting 230 the verification data to the data generation device.

The hash value may be received 210 from the data generation device through a wired and/or wireless connection (e.g. using the internet). The hash value may be encrypted and may be decrypted before calculating the verification data. The hash value may have at least 128 bits (or at least 256 bits). For example, the hash value may be received 210 from the data generation device together with a request for the generation of verification data.

The generated data may be data generated by any data generation device. The generated data may be sensor data or image data. The data generation device may be any source, which generates data. The data generation device may be a sensor (e.g. temperature sensor, magnetic field sensor, acceleration sensor) or an image sensor or camera (e.g. of a microscope or a vehicle) or a device (e.g. a microscope or a vehicle) comprising a sensor, an image sensor or a camera. For example, the generated data is received so that the generated data may be kept secret at the data generation device. The hash value may be sufficient to generate verification data.

The verification data may be calculated 220 based on the hash value and a secret key in any way, which is sufficiently secure to ensure that the verification data can only be calculated by someone knowing the secret key. For example, the verification data may be calculated 220 based on a multiplication, an addition and/or a concatenation of the hash value and the secret key and/or a subtraction of the hash value from the secret key, for example followed by a re-hashing. The verification data may also be called verification code or verification value.

The secret key may have at least 128 bits (or at least 256 bits). The secret key may have the same length as the hash value or a different length depending on the calculation algorithm for the verification data.

For example, the verification data may be calculated 220 by calculating a verification hash value of intermediate verification data. The intermediate verification data may be based on the hash value and the secret key. For example, the intermediate verification data may be calculated based on a multiplication, an addition and/or a concatenation of the hash value and the secret key and/or a subtraction of the hash value from the secret key.

The verification data may have at least 128 bits (or at least 256 bits). The verification data may have the same length as the hash value and/or the secret key or a different length depending on the calculation algorithm for the verification data. The verification data may be or may comprise a verification hash value. The same or a different hash algorithm may be used for calculating the verification hash value as for the calculation of the received hash value.

The verification data may be transmitted 130 to the data generation device through a wired and/or wireless connection (e.g. using the internet). The verification data may be encrypted before the transmission to the data generation device to enable a secure data communication to the data generation device.

For example, the hash value and/or the verification data are not stored after transmission of the verification data for later verification. For example, the hash value and/or the verification data is erased after transmission to the data generation device. The amount of required storage space can be kept low.

The method 200 may further comprise verifying whether the hash value is received from a trusted device. For example, a device identifier may be received from the data generation device. The verification may be done by comparing the device identifier with a list of device identifiers of trusted devices. If the device identifier is in the list of device identifiers of trusted devices, the data generation device may be verified as trusted device, for example. In this way, the verification data may only be generated from hash values from trusted devices and no other fake source so that verification data would not be generated from fake hash values, which could negate the system.

Additionally or alternatively, the data generation device and the verification service provider may communicate via public-private key cryptography. A private key may be stored within the software of the data generation device. Each data generation device (e.g. instrument) could have its own unique public and/or private key. To make sure the message only comes from a trusted device, the verification service provider may check the public key to ensure this data generation device it is communicating with is not lost or stolen (e.g. is trusted). For example, the server may have a database of trusted device public keys (e.g. which have been registered on the verification service provider's verification scheme).

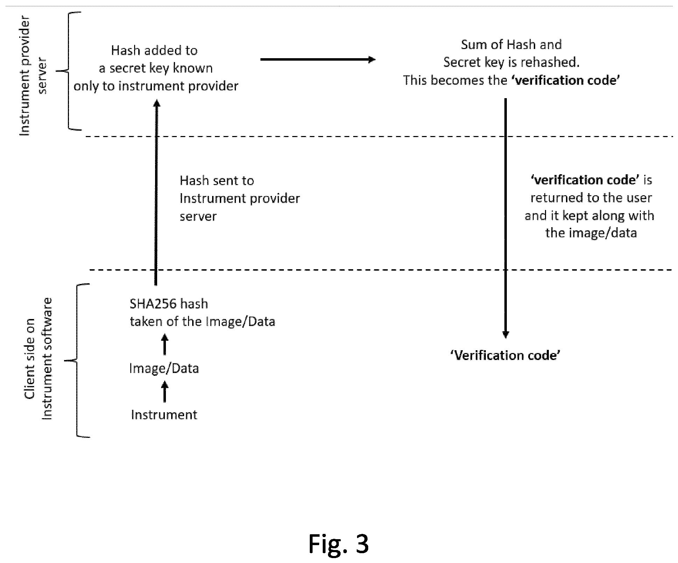

More details and aspects are mentioned in connection with the embodiments described above or below. The example shown in Fig. 2 may comprise one or more optional additional features corresponding to one or more aspects mentioned in connection with the proposed concept or one or more examples described above (e.g. Fig. 1) or below (e.g. Fig. 3-8).

Some examples relate to a system comprising one or more processors and one or more storage devices. The one or more processors are configured to receive a hash value of generated data from a data generation device and calculate verification data based on the hash value and a secret key. Further, the system is configured to transmit the verification data to the data generation device. More details and aspects are mentioned in connection with the embodiments described above or below.

Fig. 3 shows a flowchart of a method for generating a verification code. On the client side, an instrument software is executed on a computer system. The instrument (e.g. a microscope) comprises a data source (e.g. sensor or image sensor) for generating data or images. The instrument software calculates a hash (e.g. SHA-256 hash) taken of the data or image. The hash value is sent to an instrument provider server.

The instrument provider server is configured to add the hash value to a secret key known only to the instrument provider. The sum of the hash value and the secret key is rehashed to obtain verification data (e.g. a verification code VC). The verification code is returned to the user (e.g. to the instrument) and kept (e.g. stored) along with the data or image.

For example, the VC is a hash of some combination of the image hash and the secret key.

This combination could be addition, multiplication or concatenation, for example. For example, for a 3-bit hash and a 3-bit secret key:

Image hash = 123
Secret key = 456

$$VC = hash\_function(123456) \quad or \quad VC=hash\_function(123+456) \quad or \quad VC=hash\_function(123*456)$$

The length of what is being hashed may be long so that it cannot be found by brute force.

The instrument and server may communicate via public-private key cryptography. A private key may be stored within the instrument software.

More details and aspects are mentioned in connection with the embodiments described above or below. The example shown in Fig. 3 may comprise one or more optional additional features corresponding to one or more aspects mentioned in connection with the proposed concept or one or more examples described above (e.g. Fig. 1-2) or below (e.g. Fig. 4-8).

Fig. 4 shows a flowchart of a method 400 for verifying data. The method 400 comprises receiving 410 stored data and verification data of the stored data and calculating 420 a hash value for the stored data. Further, the method 400 comprises transmitting 430 the hash value and the verification data of the stored data to a verification service provider and receiving 440 verification information from the verification service provider. The verification information indicates whether the stored data has been altered.

The stored data may be sensor data or image data or any other data to be verified. The stored data may be received 410 from a data storage (e.g. a local memory of a camera, a microscope or a vehicle or a cloud memory) through a wired or wireless connection.

The verification data (e.g. stored in a linked manner with the stored data) may be data previously generated to enable the verification of the authenticity of the stored data. The verification data may be a bit sequence of at least 128 bits (or at least 256 bits). For example, the stored data and the verification data may have been stored in a predefined data format. If the stored data is image data, an image file comprising the image data and the verification data may be received 410. The verification data may be stored as meta data of the image file.

The hash value may be calculated 420 based on a hash algorithm used during the generation of the verification data. Information on the used hash algorithm may be stored together with the stored data and the verification data. For example, the hash value may be calculated based on an SHA-2 or SHA-3 algorithm. The hash value may be a bit sequence. The hash value may have at least 128 bits (or at least 256 bits). For example, the stored data may be or may comprise image data and the hash value may be calculated for the image data.

The verification data may have the same length as the hash value of the stored data. The verification data may be a hash value itself.

The hash value and the verification data may be transmitted 430 to a verification service provider through a wired and/or wireless connection (e.g. using the internet). For example, the hash value and the verification data may be sent 130 to the verification service provider together with a request for verification. The hash value and the verification data may be encrypted before the transmission to the verification service provider to enable a secure data communication to the verification service provider.

The verification service provider may provide a platform (e.g. internet platform) for receiving verification requests. The verification service provider may be the manufacturer of the data source (e.g. image sensor) or the manufacturer of a device including the data source (e.g. microscope comprising an image sensor as data source), which was originally used to generate the stored data.

For example, the stored data is not transmitted to the verification service provider. The stored data can be kept secret as the hash value and the verification data may be sufficient to verify the authenticity of the stored data (e.g. described in connection with Fig. 5).

The verification information may be received 440 from the verification service provider through a wired and/or wireless connection (e.g. using the internet). The received verification information may be encrypted verification information and may be decrypted before the information is readable.

The verification information may include information on the authenticity of the stored data. For example, the verification information provides information on whether the hash value calculated for the stored data maps to or matches the verification data. The verification information may indicate that the stored data was not changed, if the verification service provider determines that the hash value maps to or matches the verification data. The verification information may indicate that the stored data was changed, if the verification service provider determines that the hash value does not map to or match the verification data.

More details and aspects are mentioned in connection with the embodiments described above or below. The example shown in Fig. 4 may comprise one or more optional additional features corresponding to one or more aspects mentioned in connection with the proposed concept or one or more examples described above (e.g. Fig. 1-3) or below (e.g. Fig. 5-8).

Some examples relate to a system comprising one or more processors and one or more storage devices. The one or more processors are configured to receive stored data and verification data of the stored data and calculate a hash value for the stored data. Further, the system is configured to transmit the hash value and the verification data of the stored data to a verification service provider and receive verification information from the verification service provider. The verification information indicates whether the stored data has been altered. More details and aspects are mentioned in connection with the embodiments described above or below.

Fig. 5 shows a flowchart of a method 500 for verifying data. The method 500 comprises receiving 510 a hash value calculated for stored data and receiving 510 verification data generated for the stored data. Additionally, the method 500 comprises calculating 520 reference verification data based on the hash value and a secret key. Further, the method 500 comprises transmitting 530 verification information indicating whether the stored data was altered based on a comparison of the reference verification data and the received verification data.

The hash value and the verification data may be received 510 from a requesting device (e.g. a microscope, a vehicle or any or any computing device) through a wired and/or wireless connection (e.g. using the internet). The hash value and the verification data may be encrypted and may be decrypted before calculating 520 the reference verification data. The hash value and/or the verification data may have at least 128 bits (or at least 256 bits). For example, the hash value and the verification data may be received 510 from the requesting device together with a request for verification.

The stored data may be sensor data or image data or any other data to be verified. For example, the stored data is not received so that the stored data may be kept secret at the requesting device. The hash value and the verification data may be sufficient to verify the authenticity of the stored data.

The reference verification data may be calculated 520 based on the hash value and a secret key. For example, the secret key is the same secret key, which was used for calculating the received verification data. For example, the reference verification data may be calculated 520 based on a multiplication, an addition or a concatenation of the hash value and the secret key or a subtraction of the hash value from the secret key. For example, the reference verification data is calculated 520 in the same way as the received verification data.

The secret key may have at least 128 bits (or at least 256 bits). The secret key may have the same length as the hash value or a different length depending on the calculation algorithm for the reference verification data.

The reference verification data may have at least 128 bits (or at least 256 bits). The reference verification data may have the same length as the hash value and/or the secret key or a different length depending on the calculation algorithm for the reference verification data.

The verification information may include information on the authenticity of the stored data. For example, the verification information provides information on whether the received hash value maps to or matches to the received verification data. The verification information may indicate that the stored data was not changed, if the verification service provider determines that the hash value maps to or matches to the verification data. The verification information may indicate that the stored data was changed, if the verification service provider determines that the hash value does not map to or match the verification data. For example, the verification information indicates that the stored data is unaltered if the reference verification data is equal to the received verification data. For example, the verification information indicates that the stored data was altered if the reference verification data is unequal to the received verification data.

The verification information may be transmitted 130 to the requesting device through a wired and/or wireless connection (e.g. using the internet). The verification information may be encrypted before the transmission to the requesting device to enable a secure data communication to the requesting device.

For example, the hash value, the reference verification data, the verification information and/or the verification data is not stored after transmission of the verification information. For example, the hash value, the reference verification data, the verification information and/or the verification data is erased after the transmission of the verification information to the requesting device. The amount of required storage space can be kept low.

The method 500 may further comprise verifying whether the hash value and the verification data is received from a trusted device. For example, a device identifier may be received from the requesting device. The verification may be done by comparing the device identifier with a list of device identifiers of trusted devices. If the device identifier is in the list of device identifiers of trusted devices, the requesting device may be verified as trusted device, for example. In this way, the verification information may only be generated for verification requests from trusted devices.

Additionally or alternatively, the requesting device and the verification service provider may communicate via public-private key cryptography. A private key may be stored within the software of the requesting device. Each requesting device (e.g. instrument) may have its own unique public and/or private key. To make sure the message only comes from a trusted device, the verification service provider may check the public key to ensure this requesting device it is communicating with is not lost or stolen (e.g. is trusted). For example, the server may have a database of trusted device public keys (e.g. which have been registered on the company's verification scheme).

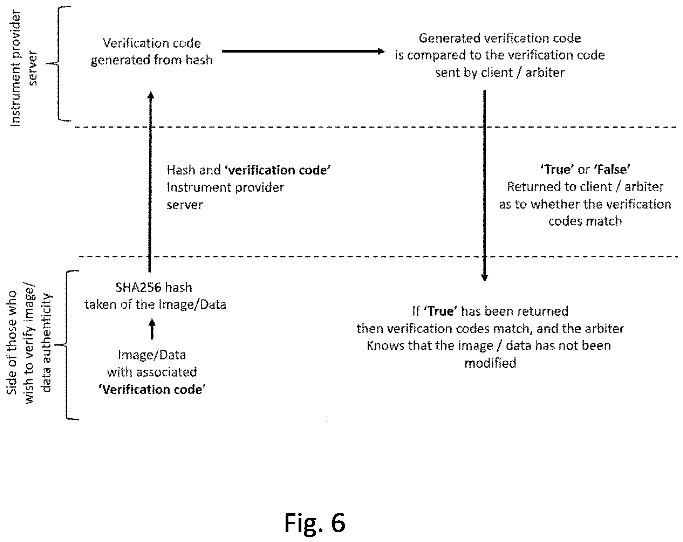

More details and aspects are mentioned in connection with the embodiments described above or below. The example shown in Fig. 5 may comprise one or more optional additional features corresponding to one or more aspects mentioned in connection with the proposed concept or one or more examples described above (e.g. Fig. 1-4) or below (e.g. Fig. 6-8).

Some examples relate to a system comprising one or more processors and one or more storage devices. The one or more processors are configured to receive a hash value calculated for stored data and verification data generated for the stored data and calculate reference verification data based on the hash value and a secret key. Further, the system is configured to transmit verification information indicating whether the stored data was altered based on a comparison of the reference verification data and the received verification data. More details and aspects are mentioned in connection with the embodiments described above or below.

Some examples relate to a method for verifying data. The method comprises receiving a hash value of generated data from a data generation device and calculating verification data based on the hash value and a secret key. Further, the method comprises transmitting the verification data to the data generation device. Additionally, the method comprises receiving a hash value calculated for stored data and the verification data and calculating reference verification data based on the hash value and the secret key. Further, the method comprises transmitting verification information indicating whether the stored data is equal to the generated data based on a comparison of the reference verification data and the received verification data.

More details and aspects are mentioned in connection with the embodiments described above or below, for example in connection with Fig. 4 and 5.

Fig. 6 shows a flowchart of a method for verification for someone to verify the authenticity of data or images. On the client side having the data or image with associated verification code (e.g. side of those who wish to verify the data or image data authenticity), a hash value (e.g. SHA-256 hash value) is taken of the data or image. The hash value and the verification code are transmitted to an instrument provider server.

At the instrument provider server, a verification code (e.g. reference verification data) is generated from the hash value. The generated verification code is compared to the verification code sent by the client or arbiter. An information "True" or "False" (e.g. verification information) is returned to the client or arbiter as to whether the verification codes match. If "True" has been returned, then the verification codes match, and the client or arbiter knows that the data or image has not been modified.

For a user or third party to verify an image or data, the image or data and the VC is needed. The hash function can be freely communicated as knowledge of this does not compromise security. Alternatively, a verifier could just download some software from the instrument manufacturer that takes in the image and takes a hash and sends this to the server for verification or the verifier could manually take the hash and upload this along with the VC to the server.

The client and server may communicate via public-private key cryptography.

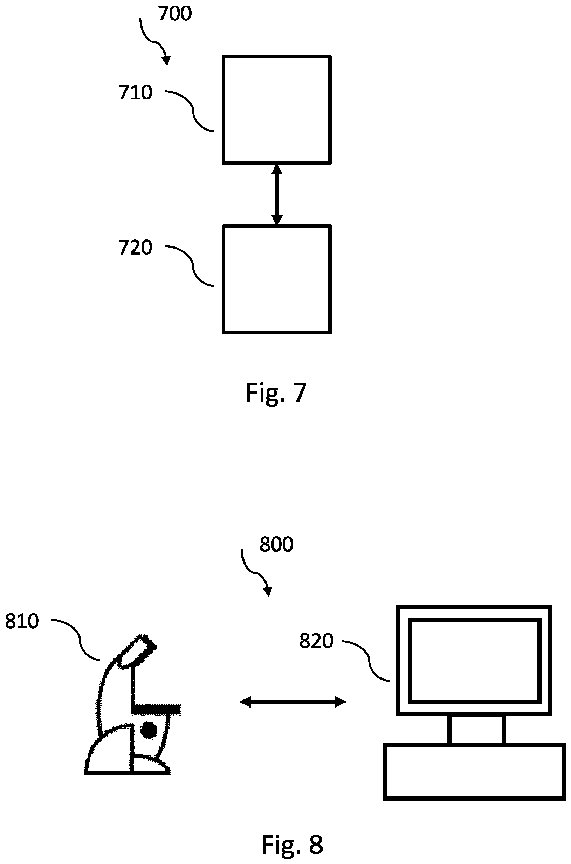

More details and aspects are mentioned in connection with the embodiments described above or below. The example shown in Fig. 6 may comprise one or more optional additional features corresponding to one or more aspects mentioned in connection with the proposed concept or one or more examples described above (e.g. Fig. 1-5) or below (e.g. Fig. 7-8).

Some examples relate to a method of verifying the authenticity of an instrument output (e.g. data to be verified). The instrument may be a microscope and the instrument output may be microscope image data.

The proposed concept may occur in two steps. Firstly, through an image device software with an internet connection, when an image is taken, a hash of the image is sent to the instrument manufacturer server. In this way, it may be totally privacy preserving since the image/data hash contains no accessible information about the image/data.

At the instrument manufacturer server side, a verification code may be generated using a secret key known only to the instrument manufacturer. This way, the instrument manufacturer might not need to store any client or customer information. It may only keep the secret key. The secret key could be just one and re-used for all customers or could vary by customer.

EP 4 621 627 A1

The verification code may then be returned to the customer and may be retained along with the image. This combination of image and verification code may enable the verification of the image, e.g. to prove the image has not been altered in any way. The generation step is highlighted in Fig. 3, for example.

When it is needed to verify that an image or data has not been modified from the instrument, (e.g. this could be by someone else in the same company, e.g. management, quality control or could be a regulatory body or publisher) the image hash along with the verification code that was generated with the image may be sent to the manufacturer server (e.g. via website or Application Programming Interface API) and here the verification code is regenerated from the image hash and compared to the verification code sent by the person or device wishing to verify the image. If the codes match, the instrument manufacturer server may return TRUE, or else FALSE. This verification step is explained in Fig. 6, for example.

The methods described above or below may be computer-implemented methods.

Fig. 7 shows a schematic illustration of a system 700 configured to perform a method described herein. The system 700 comprises one or more processors 710 and one or more storage devices 720.

The system 700 may also be called computer system and may be a local computer device (e.g. personal computer, laptop, tablet computer or mobile phone) with one or more processors 710 and one or more storage devices 720 or may be a distributed computer system (e.g. a cloud computing system with one or more processors 710 and one or more storage devices 720 distributed at various locations, for example, at a local client and/or one or more remote server farms and/or data centers). The computer system 700 may comprise any circuit or combination of circuits. In one embodiment, the computer system 700 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 700 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system X20 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 700 may also include a display device, one or more speakers, and a keyboard and/or controller, which can include a mouse, trackball, touch screen, voice-recognition device, or any other device that permits a system user to input information into and receive information from the computer system 700.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

More details and aspects are mentioned in connection with the embodiments described above or below. The example shown in Fig. 7 may comprise one or more optional additional features corresponding to one or more aspects mentioned in connection with the proposed concept or one or more examples described above (e.g. Fig. 1-6) or below (e.g. Fig. 8).

Some examples relate to a microscope comprising a system as described in connection with Fig. 7. Alternatively, a microscope may be part of or connected to a system as described in connection with Fig. 7. Fig. 8 shows a schematic illustration of a system 800 configured to perform a method described herein. The system 800 comprises a microscope 810 and a computer system 820. The microscope 810 is configured to take images and is connected to the computer system 820. The computer system 820 is configured to execute at least a part of a method described herein. The computer system 820 and microscope 810 may be separate entities but can also be integrated together in one common housing. The computer system 820 may be part of a central processing system of the microscope 810 and/or the computer system 820 may be part of a subcomponent of the microscope 810, such as a sensor, an actor, a camera or an illumination unit, etc. of the microscope 810.

More details and aspects are mentioned in connection with the embodiments described above or below. The example shown in Fig. 8 may comprise one or more optional additional features corresponding to one or more aspects mentioned in connection with the proposed concept or one or more examples described above (e.g. Fig. 1-7) or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

**List of reference Signs**

100: a method for obtaining verification data
110: receiving generated data
120: calculating a hash value
130: transmitting the hash value
140: receiving verification data
150: storing the generated data
200: a method for providing verification data
210: receiving a hash value
220: calculating verification data
230: transmitting the verification data
400: a method for verifying data
410: receiving stored data and verification data
420: calculating a hash value
430: transmitting the hash value and the verification data
440: receiving verification information
500: a method for verifying data
510: receiving a hash value
520: calculating reference verification

530: transmitting verification information
700: system
710: one or more processors
720: one or more storage devices,
800: system
810: microscope
820: computer system

**Claims**

1. A method (100) for obtaining verification data, the method comprising:

   receiving (110) generated data from a data source;
   calculating (120) a hash value for the generated data;
   transmitting (130) the hash value to a verification service provider;
   receiving (140) verification data from the verification service provider; and
   storing (150) the generated data and the verification data.

2. The method according to claim 1, wherein the generated data is not transmitted to the verification service provider.

3. The method according to one of the previous claims, wherein the generated data is image data.

4. The method according to claim 3, further comprising generating an image file comprising the image data and the verification data.

5. A method (200) for providing verification data, the method comprising:

   receiving (210) a hash value of generated data from a data generation device;
   calculating (220) verification data based on the hash value and a secret key; and
   transmitting (230) the verification data to the data generation device.

6. The method according to claim 5, wherein the generated data is not received.

7. The method according to claim 5 or 6, wherein the verification data is calculated (220) based on a multiplication, an addition or a concatenation of the hash value and the secret key or a subtraction of the hash value from the secret key followed by a re-hashing.

8. A method (400) for verifying data, the method comprising:

   receiving (410) stored data and verification data of the stored data;
   calculating (420) a hash value for the stored data;
   transmitting (430) the hash value and the verification data of the stored data to a verification service provider; and
   receiving (440) verification information from the verification service provider, wherein the verification information indicates whether the stored data has been altered.

9. The method according to claim 8, wherein the stored data is not transmitted to the verification service provider.

10. The method according to claim 8 or 9, wherein the stored data comprises image data, wherein the hash value is calculated (420) for the image data of the stored data.

11. A method (500) for verifying data, the method comprising:

    receiving (510) a hash value calculated for stored data and verification data generated for the stored data;
    calculating (520) reference verification data based on the hash value and a secret key; and
    transmitting (530) verification information indicating whether the stored data was altered based on a comparison of the reference verification data and the received verification data.

12. The method according to claim 11, wherein the stored data is not received.

13. The method according to claim 11 or 12, wherein the reference verification data is calculated (520) based on a multiplication, an addition or a concatenation of the hash value and the secret key or a subtraction of the hash value from the secret key.

14. A system (700) comprising one or more processors (710) and one or more storage devices (720), wherein the system is configured to perform at least one of the methods according to one of claims 1-13.

15. A computer program having a program code for performing a method according to one of claims 1 to 13 when the program is executed on processor.

100

| receiving generated data | 110 |

| calculating a hash value | 120 |

| transmitting the hash value | 130 |

| receiving verification data | 140 |

| storing the generated data and the verification data | 150 |

Fig. 1

200

| receiving a hash value | 210 |

| calculating  verification data | 220 |

| transmitting the verification data | 230 |

Fig. 2

**Instrument provider server**

Hash added to
a secret key known
only to instrument provider

→

Sum of Hash and
Secret key is rehashed.
This becomes the **'verification code'**

- - - - - - - - - - - - - - - - - - - - - - - - - - - - - - - - - - - - - - - - - - - -

Hash sent to
Instrument provider
server

↑

**'verification code'** is
returned to the user
and it kept along with
the image/data

↓

- - - - - - - - - - - - - - - - - - - - - - - - - - - - - - - - - - - - - - - - - - - -

**Client side on Instrument software**

SHA256 hash
taken of the Image/Data

↑

Image/Data

↑

Instrument

'Verification code'

# Fig. 3

400

| receiving stored data and verification data |
|---|

410

| calculating a hash value |
|---|

420

| transmitting the hash value |
|---|

430

| receiving verification information |
|---|

440

Fig. 4

500

| receiving a hash value |
|---|

510

| calculating  reference verification data |
|---|

520

| transmitting verification information |
|---|

530

Fig. 5

Instrument provider server

Verification code generated from hash → Generated verification code is compared to the verification code sent by client / arbiter

Hash and **'verification code'**
Instrument provider server

**'True'** or **'False'**
Returned to client / arbiter as to whether the verification codes match

Side of those who wish to verify image/ data authenticity

SHA256 hash taken of the Image/Data

↑

Image/Data with associated **'Verification code'**

If **'True'** has been returned then verification codes match, and the arbiter Knows that the image / data has not been modified

## Fig. 6

700

710

720

Fig. 7

800

810

820

Fig. 8

Europäisches
Patentamt

European
Patent Office

Office européen
des brevets

**EUROPEAN SEARCH REPORT**

Application Number

EP 24 16 4747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 557 102 B1 (WONG STEPHEN T [US] ET AL) 29 April 2003 (2003-04-29) <br> * abstract * <br> * figures 1,2,3,4,6,7 * <br> ----- | 1-15 | INV. <br> G06F21/64 <br> H04L9/32 |
| X | EP 0 963 637 A2 (KONINKL PHILIPS ELECTRONICS NV [NL]; PHILIPS SVENSKA AB [SE]) 15 December 1999 (1999-12-15) <br> * paragraph [0002] - paragraph [0003] * <br> ----- | 1-15 | |
| X | MOHAMED YASEEN JABARULLA ET AL: "Blockchain-Based Distributed Patient-Centric Image Management System", ARXIV.ORG, CORNELL UNIVERSITY LIBRARY, 201 OLIN LIBRARY CORNELL UNIVERSITY ITHACA, NY 14853, <br> 18 March 2020 (2020-03-18), XP081819496, <br> * figure 3 * <br> * page 8 - page 9 * <br> ----- | 1-15 | |
| X | US 2014/040611 A1 (TENENBOYM ISAK [US] ET AL) 6 February 2014 (2014-02-06) <br> * abstract * <br> * figures 1-4 * <br> * paragraph [0038] - paragraph [0052] * <br> ----- | 1-15 | **TECHNICAL FIELDS SEARCHED (IPC)** <br><br> G06F <br> H04L |

The present search report has been drawn up for all claims

| Place of search | Date of completion of the search | Examiner |
|---|---|---|
| The Hague | 16 August 2024 | Lamelas Polo, Yvan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 4 621 627 A1

### ANNEX TO THE EUROPEAN SEARCH REPORT
### ON EUROPEAN PATENT APPLICATION NO.

EP 24 16 4747

16-08-2024

| Patent document cited in search report | | Publication date | Patent family member(s) | | Publication date |
|---|---|---|---|---|---|
| US 6557102 | B1 | 29-04-2003 | EP | 0954809 A1 | 10-11-1999 |
| | | | JP | 4169797 B2 | 22-10-2008 |
| | | | JP | 2001505341 A | 17-04-2001 |
| | | | US | 6557102 B1 | 29-04-2003 |
| | | | WO | 9913415 A1 | 18-03-1999 |
| EP 0963637 | A2 | 15-12-1999 | CA | 2282479 A1 | 15-07-1999 |
| | | | CN | 1254464 A | 24-05-2000 |
| | | | DE | 69838094 T2 | 03-04-2008 |
| | | | EP | 0963637 A2 | 15-12-1999 |
| | | | JP | 2001515612 A | 18-09-2001 |
| | | | JP | 2010187419 A | 26-08-2010 |
| | | | KR | 20000075866 A | 26-12-2000 |
| | | | US | 6601172 B1 | 29-07-2003 |
| | | | WO | 9935785 A2 | 15-07-1999 |
| US 2014040611 | A1 | 06-02-2014 | US | 2014040611 A1 | 06-02-2014 |
| | | | US | 2016127131 A1 | 05-05-2016 |